# EUROPEAN PATENT SPECIFICATION

(11) **EP 0 552 718 B1**
(45) Date of publication and mention of the grant of the patent: **10.06.1998**
(21) Application number: 93100744.7
(22) Date of filing: 19.01.1993
(51) Int. Cl.: G03B 17/30

(54) **Photographic film cassette**
Fotofilmkassette
Cassette pour film photographique

(30) Priority: 22.01.1992 JP 9530/92
(43) Date of publication of application: 28.07.1993
(73) Proprietor: FUJI PHOTO FILM CO., LTD., Kanagawa (JP)
(72) Inventor: Mizuno, Kazunori, c/o Fuji Photo Film Co. Ltd., Minami-Ashigara-shi, Kanagawa (JP)
(74) Representative: Grünecker, Kinkeldey, Stockmair & Schwanhäusser Anwaltssozietät

(56) References cited:
- EP-A- 0 415 197
- EP-A- 0 440 240
- EP-A- 0 548 654
- DE-A- 3 033 464
- US-A- 4 899 948

## Description

The present invention relates to a photographic film cassette of the type as defined in the preamble of claim 1.

A photographic film cassette of this type is known from DE-A-30 33 464. The photographic film cassette has a cassette shell and a spool with a photographic film wound thereon. The photographic film wound on the spool is advanced through a film passageway of a port portion formed in the cassette shell to the outside of the cassette shell. In order not to expose the photographic film in the cassette shell by ambient light, the light-trapping members such as plush are attached to the film passageway. The light-trapping members are cut out of a black fabric having pile portions and non-pile portions. The fabric is formed of a based fabric and piles planted into the base fabric in strip-like portions distant to each other and separated by pileless portions. Since the fabric is formed of synthetic fibres, an ultrasonic fusion cutter is used which cuts the fabric within the non-pile portions by melting. The light-trapping members are attached to surfaces of the film passageway by means of an adhesive covering the complete rearward surface of the light-trapping members.

EP-A-440 240 describes a photographic film cassette having a passage mouth, and housing a film wound on a spool. Light-trapping members are attached to surfaces of the passage mouth for preventing ambient light to enter the cassette shell. The light-trapping members are pieces of plush or similar material cut into the desired shape. The material does not show non-pile portions. The light-trapping members can be attached to the surfaces of the passage mouth by adhesive or thermal bonding. By all bonding procedures, however, the complete rearward surface of the light-trapping members is attached to the surface of the passage mouth. In addition, the light-trapping members can also be attached by means of spot welding, the weld spots, however, are also distributed over the entire surface of the light-trapping members.

When producing the plush, the fabric is at first woven and then is applied with a filler and an adhesive so as to prevent the piles from being fallen out. When cutting such a fabric with the filler and the adhesive applied thereto by the ultrasonic fusion cutter, the filler and the adhesive are melted and hardened to be pasty grains. The pasty grains stick to the blade of the cutter to make the cutter blunt. Therefore, it is necessary to remove the pasty grains from the cutter or to change the blade for every predetermined times of cutting operations, which reduces the cutting efficiency. Further, when the grains stick to the piles, the photographic film will be scratched at the time of film transportation.

In order to obtain secure adhesion of the light-trapping members to the film passageway, both longitudinal side ends of each of the light-trapping members are pressed against the inside surface of the film passageway by use with a channel-shaped pressing member. During this attachment, piles crushed by the channel-shaped pressing member press inner piles down. It may be preferable to reduce the width of the light-trapping members to impart a preferable external appearance to the photographic film cassette as well as to miniaturize its size by limiting the protrusion of the port portion. In such narrowed light-trapping members, if crushed piles press down the other piles when attaching them to the film passageway, the density of erect piles would be reduced, which causes ambient light to enter the cassette shell.

It is therefore an object of the present invention to provide a photographic film cassette and a method for making light-trapping members by which ambient light is preferably prevented from entering a cassette shell.

It is another object of the present invention to provide a photographic film cassette and a method for making light-trapping members by which a photographic film will not be scratched during its transportation.

It is still another object of the present invention to provide a method for making light-trapping members by which product efficiency can be improved.

In order to achieve the above and other objects, each of light-trapping members of the present invention has a pile planted portion and at least one non-pile portion on one or both longitudinal sides of the pile planted portion. The non-pile portions of the light-trapping members are attached to upper and lower surfaces of a film passageway of a cassette shell. In a preferred embodiment of the present invention, the piles are secured to the base fabric by a filler having a glass transition temperature of 20° C or more to prevent the piles from falling off from the base fabric. In order to attach the light-trapping members, an ultrasonic welding machine is used whose horn has a channel-shaped end portion only to press the non-pile portions.

In a method of making light-trapping members, a fabric is formed to have pile planted portions and non-pile portions alternately arranged. Then, the fabric is cut to obtain light-trapping members such that the whole non-pile portion is left on one longitudinal side of each pile planted portion or half the non-pile portion is left on both longitudinal sides of each pile planted portion.

According to the present invention defined in claim 1, only the non-pile portions of the light-trapping members are pressed against the film passageway by the ultrasonic welding machine for attachment, so that the piles will not be crushed or pressed down. Thereby, the light-trapping members can be attached to the film passageway securely to prevent ambient light from entering the cassette shell surely. Further, it is possible to limit the projection of a port portion in order to impart a preferable external appearance to a photographic film cassette and to miniaturize its size.

Furthermore, the piles are secured to the base fabric by the filler having the glass transition temperature of 20° C or more, so that hardened filler grains will not be generated at the cutting operation of the fabric.

The above and other objects and advantages of the present invention will become apparent from the following detailed description of preferred embodiments when read in connection with the accompanying drawings, in which:
Fig. 1 is a perspective view of a photographic film cassette according to the present invention;
Fig. 2 is a sectional side view of the photographic film cassette in Fig. 1;
Fig. 3 is a partially enlarged view of Fig. 2;
Fig. 4 is a perspective view of a fabric and a light-trapping member cut therefrom;
Fig. 5 is an enlarged sectional view of the light-trapping member formed of a woven fabric;
Fig. 6 is an explanatory view illustrating the way to attach the light-trapping member to a film passageway of the photographic film cassette of Fig. 1; and
Fig. 7 is a weave of the fabric of Fig. 4.

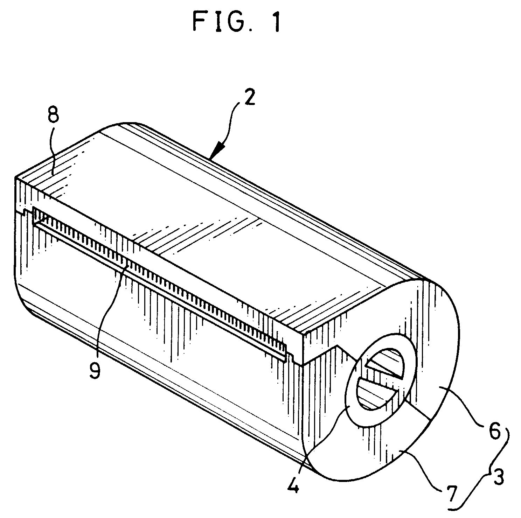

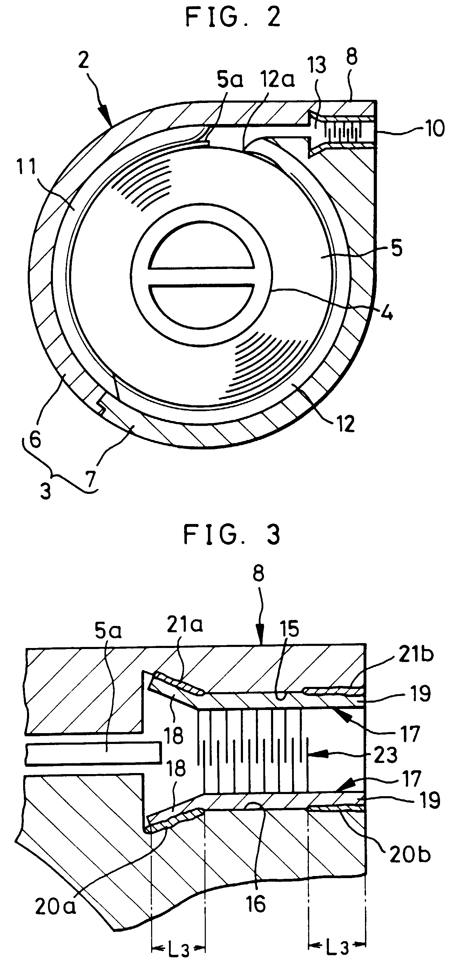

In Fig. 1, a photographic film cassette 2 is constituted of a cassette shell 3 and a spool 4 with a photographic film 5 (see Fig. 2) wound thereon. The cassette shell 3 consists of upper and lower shell halves 6 and 7 formed of plastic, e.g., polystyrene. A port portion 8 is formed at one end of the juncture of the shell halves 6 and 7. The photographic film 5 is advanced to the outside of the cassette shell 3 through a film passage mouth 9 of the port portion 8. The protrusion of the port portion 8 is limited to impart a preferable external appearance to the photographic film cassette 2 as well as to miniaturize it for easy handling.

In Fig. 2 illustrating the inside of the photographic film cassette 2, annular ridges 11 and 12 are formed on the internal surfaces of the respective shell halves 6 and 7 so as to prevent the roll of photographic film 5 from loosening. When the spool 4 is rotated clockwise from this condition, a film leader 5a of the photographic film 5 is separated from the film roll by a claw 12a defined at an edge of the ridge 12, passed through a film passageway 13 at an end of which the film passage mouth 9 is located. There are other methods for advancing a photographic film out of a cassette shell by rotating a spool. In U.S.P 4,834,306, a pair of flanges which can perform a relative motion with respect to a spool has circumferential lips extending at right angles from the peripheries of the flanges. The two lips face each other and clamp both lateral side ends of a roll of film to prevent it from loosening. Thereby, the leading end of the film can be advanced out of a cassette shell smoothly. Also, in Japanese Patent Laid-open Publication No. 4-115251, at least one of flanges which can perform a relative motion with respect to a spool is formed with a circumferential lip the same as in U.S.P. 4,834,306 for the same purpose. Ridges are provided on the inside surface of a cassette shell so as to make the interval of the flanges wider in the vicinity of a film passage mouth.

As illustrated in Fig. 3, recesses 15 and 16 are formed in the upper and lower surfaces of the film passageway 13. The innermost portions of the recesses 15 and 16 are deeply grooved toward the inside of the cassette shell 3 in a V-shape. A pair of light-trapping members 17 which are dyed in black to prevent ambient light from entering the cassette shell 3 are attached to the inner and outer ends of the recesses 15 and 16 via selvedges 18 and 19 by ultrasonic welding without using an adhesive. When advancing the photographic film 5 to the outside of the cassette shell 3, the film leader 5a is passed smoothly between the light-trapping members 17 because of V-shaped grooves and will not be in contact with ends of the light-trapping members 17. Reference numerals 20a, 20b, 21a, 21b indicate melted polystyrene areas whose width L₃ is 1.2 mm and large enough to attach the light-trapping members 17 securely.

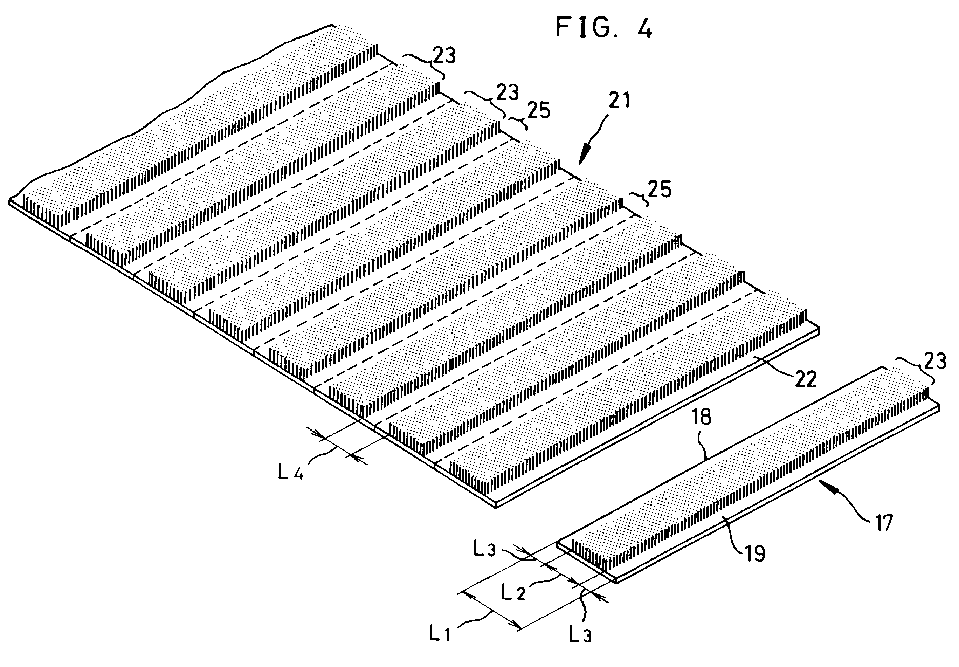

Fig. 4 illustrates a fabric 21 from which the light-trapping members 17 are formed. The fabric 21 has pile planted portions 23 with a width L₂ and non-pile portions 25 with a width L₄ alternately. The pile planted portions 23 are formed by planting piles 24 in a base fabric 22. The centers of the non-pile portions 25 of the fabric 21 are cut by an ultrasonic fusion cutter to obtain the light-trapping members 17 having a width L₁. The cutting may be performed by laser, a heated cutter, a heated wire, etc. The light-trapping member 17 has halves of the non-pile portion 25 having the width L₃ on respective longitudinal sides as selvedges 18, 19. The width L₁ of the light-trapping member 17 is 5.6 mm, the width L₂ of the pile planted portion 23 is 3.2 mm, and the width L₃ (L₄/2) of the selvedges 18 and 19 is 1.2 mm.

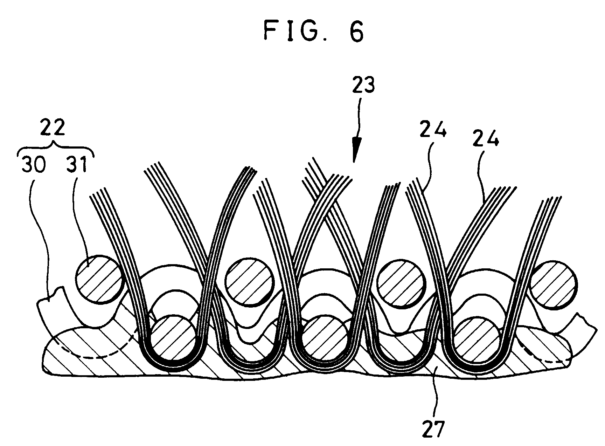

A woven or knitted fabric is used for the base fabric 22. As illustrated in Fig. 6, the entire back surface of the base fabric 22 is coated with a filler 27 in order to prevent the piles 24 from falling out from the base fabric 22. The light-trapping member 17 is attached to the plastic cassette shell 3 by ultrasonic welding, so an adhesive is not applied thereto.

When the glass transition temperature of the filler 27 is 20° C or more, it is possible to prevent hardened pasty filler grains from being produced. When the hardened pasty filler grains stick to an ultrasonic fusion cutter (not shown) at the time of cutting the light-trapping members 17 from the fabric 21, the cutting efficiency is reduced extremely. Besides, sticking of the hardened pasty filler grains to the piles 24 causes the surfaces of the photographic film 5 to be scratched. Therefore, the filler 27 should be selected from among styrene-butadiene resin, styrene-acrylic group resin, polyacrylic ester resin, polystyrene group resin, polystyrene-butadiene group resin, polyolefin group resin, vinyl acetate group resin, polyamide group resin, polyester group resin, polyurethane group resin, mixtures of these or copolymers of these.

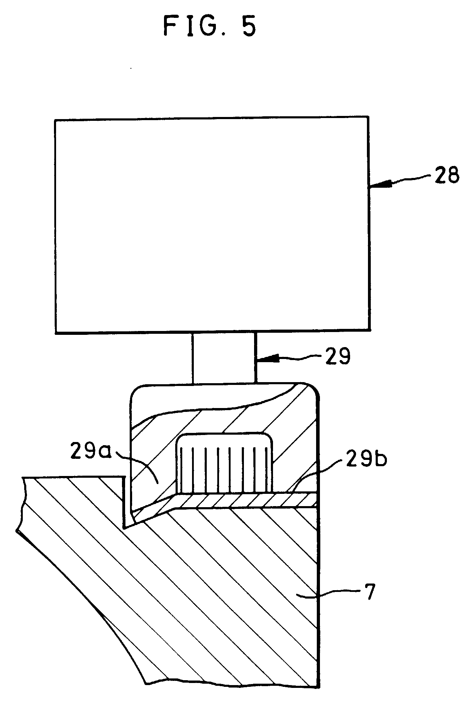

It will be described how to attach the light-trapping members 17 to the cassette shell 3. The light-trapping members 17 are welded to the recesses 15 and 16 of the cassette shell 3 at 50 joules by an ultrasonic welding machine 28, e.g., Model 947 M (trade name: BRANSON ULTRASONICS CORPORATION) after adjusting it to an energy mode. As illustrated in Fig. 5, when welding the light-trapping member 17 to the lower shell half 7, the piles 24 of the pile planted portion 23 will not be crushed since end portions 29a and 29b of a horn 29 of the Model 947 M are channel-shaped so as to only press the selvedges 18 and 19 of the light-trapping member 17 against the lower shell half 7. Further, there is no pile on the selvedges 18 and 19, so that the piles 24 of the pile planted portion 23 will never be pressed down by crushed piles as conventional. Accordingly, even though the width of the pile planted portion 23 is narrow to provide the selvedges 18 and 19 as compared with the conventional one, it is possible to prevent ambient light from entering the cassette shell 3 surely. Furthermore, since hardened pasty filler grains will not stick to the piles 24, the photographic film 5 is prevented from being scratched when it passes between the light-trapping members 17. In this embodiment, the light-trapping members 17 are welded to the cassette shell 3 at both selvedges 18 and 19 but may be welded only at the selvedge 18. Furthermore, not the center but an end of the non-pile portion 25 may be cut to form a light-trapping member having one selvedge. In this case, the one selvedge is disposed on an inclined surface 21a and welded thereto.

Several examples and comparative examples will be discussed below to explain the present invention in greater detail.

### Example 1

The base fabric 22 was woven by warp threads 30 and weft threads 31. Two twisted antistatic nylon threads of 50 denier consisting of 10 filaments were used for the warp threads 30, and two twisted antistatic nylon threads of 75 denier/24 filaments were used for the weft threads 31. An antistatic nylon thread of 100 denier/48 filaments was used for the piles 24.

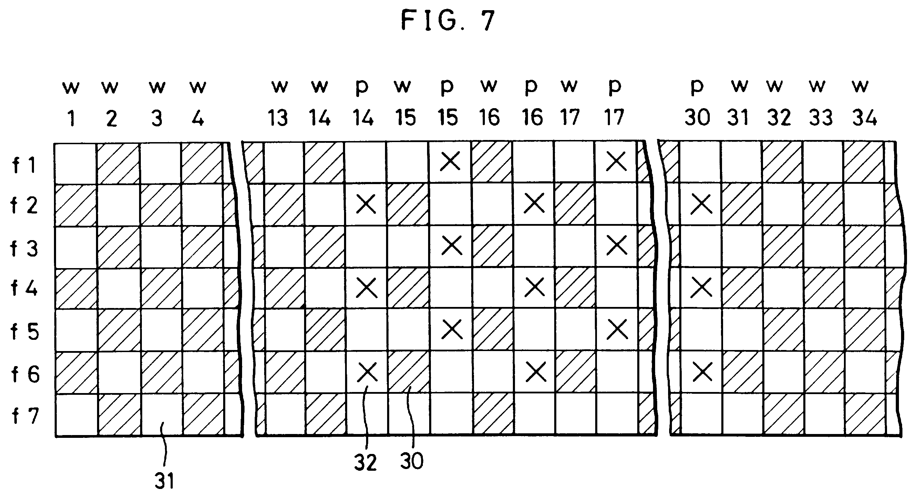

The fabric 21 was woven by a needle loom and has 16 rows of pile planted portions 23 and the non-pile portions 25 between each of the pile planted portions 23. The width of the non-pile portions 25 was 3.0 mm. As illustrated in Fig. 7 showing the weave of the fabric 21, each pile planted portion 23 had 17 warp threads 30 and 17 pile threads 32 alternately arranged in the width direction of the light-trapping member 17, while each non-pile portion 25 had 14 warp threads 30 in the same direction. In Fig. 7, "P", "W", and "f" indicate pile, warp and weft respectively. The piles 24 were made by cutting the center of loops having formed by the pile threads 32.

After weaving, the fabric 21 was dyed with a black acid dye of 5% on the weight of fiber (o.w.f.) e.g., Nylon Black SGL (trade name: MITSUI TOATSU CHEMICALS, INC.). Then, the fabric 21 was dried and subjected to a pile arranging treatment. Thereafter, as illustrated in Fig. 6, the back surface of the fabric 21 was coated with the filler 27, e.g., a mixture (manufactured by Cemedine Co., Ltd.) of styrene-butadiene resin emulsion and styrene-acrylic group resin emulsion by a roller coater. The glass transition temperature of the mixture is 60° C and the solid component amount thereof was 20 g/m².

Finally, the fabric 21 was cut in the centers of the non-pile portions 25 along broken lines as illustrated in Fig. 4, by the ultrasonic fusion cutter to obtain the light-trapping members 17 having the selvedges 18 and 19 with no piles 24.

### Example 2

The fabric 21 was knitted by a 22 gauge double raschel machine. A chain yarn and an inlaid thread were a polyester thread of 75 denier/24 filaments, and a pile thread was a polyester thread of 100 denier/36 filaments. The pile planted portions 23 and the non-pile portions 25 were knitted alternately and repeatedly for each increase of 6 wales to obtain 130 rows of pile planted portions 23. Four piles were formed per loop and planted through between a needle loop and a sinker loop.

The fabric 21 was then dyed by a black disperse dye of 5% o.w.f. and subjected to an antistatic treatment by Parmalose TM (trade name: ICI Ltd.). The non-pile portions 25 of the fabric 21 were cut by the ultrasonic fusion cutter so as to obtain the light-trapping members 17 without applying the filler 27 and an adhesive to the fabric 21. The width L₁ of the light-trapping members 17 was 5.6 mm. The other processes were the same as in Example 1.

### Example 3

The fabric 21 of the Example 2 after having been subjected to the antistatic treatment was coated with the filler 27 of vinyl acetate, e.g., Cevian-A 257 (trade name: Daicel Chemical Industries, Ltd.) by a floating knife coater, the solid component amount of the filler 27 being 30 g/m². The non-pile portions 25 were then cut by the ultrasonic fusion cutter to obtain the light-trapping members 17. The glass transition temperature of the filler 27 is 30° C.

### Comparative Example 1

In Example 1, a fabric was formed by planting piles in the entire surface of the base fabric 22 without providing the non-pile portions 25. The fabric was applied with an ethyrene-Vinyl acetate group adhesive of 70 g/m², whose glass transition temperature was -25° C, and then cut by the ultrasonic fusion cutter to obtain the light-trapping members.

### Comparative Example 2

A fabric without non-pile portions the same as in Comparative Example 1 was formed and applied with 40 g/m² of styrene-butadiene resin having the glass transition temperature of 10° C, instead of the mixture of styrene-butadiene resin emulsion and styrene-acrylic group resin emulsion. The fabric 21 was then cut by the ultrasonic fusion cutter to obtain the light-trapping members. Naturally, an adhesive was not applied thereto.

When cutting each fabric of Examples 1 to 3 to obtain the light-trapping members by the ultrasonic fusion cutter, no hardened pasty grain stuck to the ultrasonic fusion cutter so that there was no need to change the blade of the ultrasonic fusion cutter, which made it possible to perform the cutting operation efficiently.

On the other hand, when cutting each fabric of Comparative Examples 1 and 2 to obtain the light-trapping members by the ultrasonic fusion cutter, hardened pasty grains stuck to the ultrasonic fusion cutter. Therefore, the blade of the ultrasonic fusion cutter became dull and then had to be cleaned or changed.

After the cutting operation, the light-trapping members of each of Examples 1 to 3 were attached at the selvedges 18 and 19 by the ultrasonic welding machine to the photographic film cassette 2 as illustrated in Fig. 1. In the meantime, the light-trapping members of each of Comparative Examples 1 and 2 were attached at portions corresponding to the selvedges 18 and 19 of Examples 1 to 3 to the photographic film cassette 2. For the attachment, the ultrasonic welding machine was used in Comparative Example 2, while a heat sealer was used in Comparative Example 1. At this time, the thickness of the light-trapping members of each of Examples 1 to 3 was not changed but the thickness of the light-trapping members of Comparative Examples 1 and 2 was changed from 1.8 mm to 1.3 mm.

The photographic film cassettes 2 with the respective light-trapping members attached thereto were then transported to a darkroom, where each film leader 5a of the photographic films 5 was advanced through the film passage mouth 9 to the outside of the cassette shell 3 and rewound inside the cassette shell 3. Thereafter, light of 70,000 lux was illuminated for three minutes toward each film passage mouth 9 of the photographic film cassettes 2, which then were subjected to development under the same condition. Then, two tests were carried out. In the first test for evaluating the light-shielding ability of the light-trapping members, it was detected how many turns of each of the photographic films 5 wound on the spools 4 were fogged. In the second test, the photographic films 5 were visually observed so as to detect whether they had scratches or not, or printed on a color paper for the same purpose.

As the results of the above tests, no fogging and scratches were observed in the photographic films 5 of the photographic film cassettes 2 having the light-trapping members of Examples 1 to 3. On the other hand, in the photographic film cassettes 2 having the light-trapping members of Comparative Examples 1 and 2 attached thereto, fogging was observed in the first turn of the film roll and scratches were detected also.

The respective light-trapping members were attached to the photographic film cassettes 2 at 50 joules by the Model 947 M under the energy mode but may be attached at a range from 20 to 150 joules though a range from 30 to 110 joules is preferable. At less than 20 joules, sufficient adhesion cannot be obtained, whereas the cassette shell 3 would be deformed at more than 150 joules.

While the present invention has been described in detail with reference to a preferred embodiment, various modifications within the scope of the invention will be apparent to those of working skill in this technological field. Thus, the invention should be considered as limited only by the appended claims.

## Claims

1. A photographic film cassette (2) having a plastic cassette shell (3) for rotatably containing a spool (4) with a photographic film (5) wound thereon and a film passageway (13) which is formed in said cassette shell (3) by a first and a second surface arranged distant to each other in a facing relationship to allow said photographic film (5) to be transported therethrough, said photographic film cassette (2) further comprising a pair of light-trapping members (17) attached to respective first and second surfaces of said film passageway (13) so as to prevent light from entering said cassette shell (3), each of said light-trapping members (17) consisting of an elongated pile planted portion (23) and at least one non-pile portion (18,19) parallel to the pile planted portion, said portions extending in a direction perpendicular to the transporting direction of said photographic film (5) through said passageway;
**characterised in that** said non-pile portion (18,19) forms an attachment portion and said light-trapping members (17) are attached to said first and second surfaces by welded areas (20a,20b,21a,21b) only provided between said at least one non-pile portion (18,19) and said first or second surface, respectively, leaving said pile planted portion (23) unattached to said first and second surface, respectively.

2. A photographic film cassette (2) as defined in claim 1, wherein said cassette shell (3) consists of two shell halves (6,7).

3. A photographic film cassette (2) as defined in claim 1 or 2, wherein each of said light-trapping members (17) has two non-pile portions and said two non-pile portions (18,19) are disposed on respective both sides of said pile planted portion (23).

4. A photographic film cassette (2) as defined in any one of claims 1 to 3, wherein said pile planted portion (23) is formed by planting piles (24) in a base fabric (22).

5. A photographic film cassette (2) as defined in claim 4, wherein said piles (24) are secured to said base fabrics (22) by a filler (27) having a glass transition temperature of 20° C or more.

6. A photographic film cassette (2) as defined in any one of claims 1 to 5, wherein the first and second surfaces of said film passageway (13) have respective recesses (15,16) and said light-trapping members (17) are attached to said recesses (15,16).

7. A photographic film cassette (2) as defined in claim 6, wherein each of said recesses (15,16) has an innermost portion grooved toward the inside of said cassette shell (3) in a V-shape and one of said two non-pile portions (18,19) is disposed on the innermost portion.

8. A photographic film cassette (2) as defined in any one of claims 1 to 7, wherein said non-pile portions of the light-trapping members (17) are ultrasonic welded to the first and second surfaces of said film passageway (13).

9. A photographic film cassette (2) as defined in any of claims 1 to 8, further comprising means for preventing the roll of said photographic film (5) from being loosened when advancing a film leader of said photographic film (5) out of said cassette shell (3) by rotation of said spool (4).

10. A photographic film cassette (2) as defined in of claim 4 or 5, wherein said base fabrics (22) are formed of synthetic fibres which are melted by heat.

11. A photographic film cassette (2)as defined in any one of claims 4, 5, 10, wherein said base fabrics (22) are a woven fabric.

12. A photographic film cassette (2) as defined in any one of claims 4, 5, 10, wherein said base fabrics (22) are a knitted fabric.

13. A photographic film cassette (2) as defined in any one of claims 10 to 12, wherein said melted areas (20a, 20b, 21a, 21b) have a width (L₃) in the transporting direction of said film which corresponds to the width (L₃) of said non-pile portion (18,19).

14. A photographic film cassette (2) as defined in any one of claim 1 or 2 wherein said non-pile portion (18,19). consists of a material which does not change the thickness by being welded.

## Patentansprüche

1. Fotofilmkassette (2) mit einer Kassettenhülse (3) aus Kunststoff zum drehbaren Aufnehmen einer Spule (4), auf die ein Fotofilm (5) gewickelt ist, und einem Filmdurchtritt (13), der in der Kassettenhülse (3) durch eine erste und eine zweite Oberfläche ausgebildet ist, die im Abstand zueinander in einer zueinander gerichteten Beziehung angeordnet sind, damit der Fotofilm (5) dazwischen hindurchtransportiert werden kann, wobei die Fotofilmkassette (2) femer ein Paar lichtabschirmender Teile (17) enthält, die an entsprechenden ersten und zweiten Oberflächen des Filmdurchtritts (13) angeordnet sind, um zu verhindern, daß Licht in die Kassettenhülse (3) eindringt, wobei jedes der lichtabschirmenden Teile (17) aus einem langgestreckten Florbereich (23) und mindestens einem florlosen Bereich (18, 19) parallel zum Florbereich besteht, die sich in einer Richtung rechtwinklig zur Transportrichtung des Fotofilms (5) durch den Durchtritt erstrecken,
**dadurch gekennzeichnet,** daß der florlose Bereich (18, 19) einen Anbringungsbereich bildet und die lichtabschirmenden Teile (17) an den ersten und zweiten Oberflächen durch Schweißbereiche (20a, 20b, 21a, 21b) befestigt sind, die nur zwischen den mindestens einem florlosen Bereich (18 und 19) und der jeweiligen ersten oder zweiten Oberfläche vorgesehen sind, wobei die Florbereiche (23) mit der jeweiligen ersten oder zweiten Oberfläche unverbunden bleiben.

2. Fotofilmkassette (2) nach Anspruch 1, wobei die Kassettenhülse (3) aus zwei Hülsenhälften (6, 7) besteht.

3. Fotofilmkassette (2) nach Anspruch 1 oder 2, wobei jedes der lichtabschirmenden Teile (17) zwei florlose Bereiche aufweist, und die beiden florlosen Bereiche (18, 19) an den entsprechenden beiden Seiten des Florbereichs (23) angeordnet sind.

4. Fotofilmkassette (2) nach einem der Ansprüche 1 bis 3, wobei der Florbereich (23) durch Einsetzen von Florfäden (24) in ein Basistextilmaterial (22) gebildet ist.

5. Fotofilmkassette (2) nach Anspruch 4, wobei die Florfäden (24) am Basistextilmaterial (22) durch einen Füllstoff (27) befestigt sind, der eine Glasübergangstemperatur von 20°C und mehr aufweist.

6. Fotofilmkassette (2) nach einem der Ansprüche 1 bis 5, wobei die ersten und zweiten Oberflächen des Filmdurchtritts (13) jeweils Vertiefungen (15, 16) aufweisen, und die lichtabschirmenden Teile (17) an diesen Vertiefungen (15, 16) befestigt sind.

7. Fotofilmkassette (2) nach Anspruch 6, wobei jede der Vertiefungen (15, 16) einen innersten Bereich aufweist, der in Richtung auf die Innenseite der Kassettenhülse (3) V-förmig genutet ist, und wobei eine der beiden florlosen Bereiche (18, 19) im innersten Bereich angeordnet ist.

8. Fotofilmkassette (2) nach einem der Ansprüche 1 bis 7, wobei die florlosen Bereiche der lichtabschirmenden Teile (17) mit den ersten und zweiten Oberflächen des Filmdurchtritts (13) ultraschallverschweißt sind.

9. Fotofilmkassette (2) nach einem der Ansprüche 1 bis 8, femer enthaltend eine Einrichtung zum Verhindem, daß sich die Rolle des Fotofilms (5) lockert, wenn ein vorlaufendes Filmende des Fotofilms (5) durch Drehung der Spule (4) aus der Kassettenhülse (3) herausgeschoben wird.

10. Fotofilmkassette (2) nach Anspruch 4 oder 5, wobei das Basistextilmaterial (22) aus synthetischen Fasern gebildet ist, die durch Wärme schmelzbar sind.

11. Fotofilmkassette (2) nach einem der Ansprüche 4, 5, 10, wobei das Basistextilmaterial (22) ein gewebtes Textilmaterial ist.

12. Fotofilmkassette (2) nach einem der Ansprüche 4, 5, 10, wobei das Basistextilmaterial (22) ein gewirktes Textilmaterial ist.

13. Fotofilmkassette (2) nach einem der Ansprüche 10 bis 12, wobei die geschmolzenen Flächen (20a, 20b, 21a, 21b) eine Breite (L₃) in Transportrichtung des Films aufweisen, der der Breite (L₃) des florlosen Bereichs (18, 19) entspricht.

14. Fotofilmkassette (2) nach einem der Ansprüche 1 oder 2, wobei der florlose Bereich (18, 19) aus einem Material besteht, das seine Dicke beim Schweißen nicht ändert.

## Revendications

1. Cassette (2) de pellicule photographique ayant une enveloppe (3) de cassette formée de matière plastique et destinée à contenir une bobine (4) qui peut tourner et sur laquelle est enroulée une pellicule photographique (5), et un passage (13) de pellicule qui est formé dans l'enveloppe (3) de cassette par une première et une seconde surface distantes l'une de l'autre et placées en regard afin que la pellicule photographique (5) puisse être transportée entre elles, la cassette (2) comprenant en outre une paire d'organes (17) de piégeage de lumière fixés à une première et une seconde surface respective du passage (13) de pellicule afin que la lumière ne puisse pas entrer dans l'enveloppe (3) de la cassette, chacun des organes (17) de piégeage de lumière étant constitué d'une partie allongée (23) à velours implanté et d'au moins une partie sans velours (18, 19) parallèle à la partie à velours implanté, ces parties s'étendant en direction perpendiculaire à la direction de transport de la pellicule photographique (5) dans le passage,
caractérisée en ce que la partie sans velours (18, 19) forme une partie de fixation et les organes (17) de piégeage de lumière sont fixés aux première et seconde surfaces par des zones soudées (20a, 20b, 21a, 21b) disposées uniquement entre au moins une partie sans velours (18, 19) et la première ou seconde surface respectivement, la partie (23) à velours implanté n'étant pas fixée à la première et à la seconde surface respectivement.

2. Cassette (2) de pellicule photographique selon la revendication 1, dans laquelle l'enveloppe (3) de la cassette est constituée de deux moitiés (6, 7) d'enveloppe.

3. Cassette (2) de pellicule photographique selon la revendication 1 ou 2, dans laquelle chacun des organes (17) de piégeage de lumière a deux parties sans velours et les deux parties sans velours (18, 19) sont placées des deux côtés respectifs de la partie (23) à velours implanté.

4. Cassette (2) de pellicule photographique selon l'une quelconque des revendications 1 à 3, dans laquelle la partie (23) à velours implanté est formée par implantation de poils (24) dans une étoffe de base (22).

5. Cassette (2) de pellicule photographique selon la revendication 4, dans laquelle le velours (24) est fixé à l'étoffe de base (22) par un rembourrage (27) ayant une température de transition vitreuse supérieure ou égale à 20 °C.

6. Cassette (2) de pellicule photographique selon l'une quelconque des revendications 1 à 5, dans laquelle la première et la seconde surface du passage (13) de pellicule ont des cavités respectives (15, 16) et les organes (17) de piégeage de lumière sont fixés aux cavités (15, 16).

7. Cassette (2) de pellicule photographique selon la revendication 6, dans laquelle chacune des cavités (15, 16) a une partie interne à gorges vers l'intérieur de l'enveloppe (3) de cassette avec une configuration en V et l'une des deux parties sans velours (18, 19) est placée dans la partie la plus interne.

8. Cassette (2) de pellicule photographique selon l'une quelconque des revendications 1 à 7, dans laquelle les parties sans velours des organes (17) de piégeage de lumière sont soudées par ultrasons à la première et à la seconde surface du passage (13) de pellicule.

9. Cassette (2) de pellicule photographique selon l'une quelconque des revendications 1 à 8, comprenant en outre un dispositif destiné à empêcher le desserrage du rouleau de pellicule photographique (5) lors de l'avance d'une amorce de la pellicule (5) hors de l'enveloppe (3) de la cassette par rotation de la bobine (4).

10. Cassette (2) de pellicule photographique selon la revendication 4 ou 5, dans laquelle l'étoffe de base (22) est formée de fibres de synthèse qui sont fondues par chauffage.

11. Cassette (2) de pellicule photographique selon l'une quelconque des revendications 4, 5 et 10, dans laquelle l'étoffe de base (22) est un tissu.

12. Cassette (2) de pellicule photographique selon l'une quelconque des revendications 4, 5 et 10 dans laquelle l'étoffe de base (22) est formée d'un tricot.

13. Cassette (2) de pellicule photographique selon l'une quelconque des revendications 10 à 12, dans laquelle les zones fondues (20a, 20b, 21a, 21b) ont une largeur (L₃) dans la direction de transport de la pellicule qui correspond à la largeur (L₃) de la partie sans velours (18, 19).

14. Cassette (2) de pellicule photographique selon la revendication 1 ou 2, dans laquelle la partie sans velours (18, 19) est constituée d'un matériau qui ne change pas d'épaisseur lors du soudage.
